# FASCICULE DE BREVET EUROPEEN

(11) **EP 1 359 345 B1**
(45) Date de publication et mention de la délivrance du brevet: **06.02.2008**
(21) Numéro de dépôt: 03290957.4
(22) Date de dépôt: 17.04.2003
(51) Int. Cl.: F16H 25/20

(54) **Dispositif d'actionnement à éléments roulants intermédiaires**
Antriebsvorrichtung mit Wälzlager
Actuator with rolling bearing

(30) Priorité: 24.04.2002 FR 0205136
(43) Date de publication de la demande: 05.11.2003
(73) Titulaire: TRANSROL, 73009 Chambéry (FR)
(72) Inventeur: Dubus, Jerôme, 73290 La Motte Servolex (FR); Boch, Christian, 73000 Chambéry (FR); Hayward, Peter K., Milton Keynes, Buckinghamshire MK7 8RF (GB)
(74) Mandataire: Casalonga, Axel

(56) Documents cités:
- DE-A- 19 711 773
- DE-C- 19 903 718
- US-A- 5 848 554
- US-B1- 6 234 034

## Description

La présente invention concerne le domaine des dispositifs d'actionnement permettant de déplacer l'un par rapport à l'autre, selon une direction, au moins deux organes d'un appareillage ou d'une machine.

On connaît largement des dispositifs d'actionnement à vis et écrou dont les filetages sont en prise directe ou en prise indirecte par l'intermédiaire d'éléments roulants tels que des billes ou des rouleaux. Lorsque la vis est entraînée en rotation par rapport à l'écrou, ou réciproquement, la tige ou l'écrou se déplacent l'un par rapport à l'autre selon leur direction longitudinale, engendrant un déplacement relatif des organes à actionner.

Il peut arriver que l'état de fonctionnement des dispositifs de fonctionnement ci-dessus se déteriorent jusqu'à un point tel que le couple d'entraînement ne soit plus en mesure de produire l'actionnement desdits organes, le cas le plus défavorable résultant d'un blocage total du dispositif d'actionnement.

Le document DE 19 711 773 décrit un dispositif d'actionnement selon le preambule de la revendication 1.

Dans le cas où les organes à actionner appartiennent à un appareillage ou à une machine dont le fonctionnement ou l'utilisation présentent des risques, une déterioration des dispositifs d'actionnement précités constitue un inconvénient majeur.

La présente invention a pour but de proposer un dispositif d'actionnement permettant en particulier de réduire de tels risques.

Le dispositif d'actionnement selon l'invention comprend : une tige longitudinale, un fourreau intermédiaire placé coaxialement à et autour de ladite tige, un fourreau extérieur placé coaxialement à ladite tige et autour dudit fourreau intermédiaire, des moyens intérieurs de liaison à filetage permettant de relier la tige longitudinale et le fourreau intermédiaire et adaptés pour engendrer un mouvement axial de l'un par rapport à l'autre, des moyens extérieurs de liaison à filetage permettant de relier le fourreau intermédiaire et le fourreau extérieur et adaptés pour engendrer un mouvement axial de l'un par rapport à l'autre, lesdits moyens intérieurs de liaison comprenant des éléments roulants intérieurs en prise d'une part avec le filetage extérieur de la tige et le filetage intérieur du fourreau intermédiaire et/ou lesdits moyens extérieurs de liaison comprenant des éléments roulants extérieurs en prise d'une part avec le filetage extérieur du fourreau intermédiaire et le filetage intérieur du fourreau extérieur.

Selon l'invention, le dispositif d'actionnement peut avantageusement comprendre des moyens de couplage permettant de relier en rotation sélectivement la tige et le fourreau intermédiaire ou le fourreau intermédiaire et le fourreau extérieur.

Selon l'invention, lesdits moyens de couplage sont de préférence tels que, pour un effort axial à transmettre donné, un premier desdits moyens de liaison fonctionne et le second ne fonctionne pas ou est bloqué et que, lorsque le couple d'entrée ou moteur, appliqué à la tige ou au fourreau extérieur, dépasse un seuil déterminé fonction de l'effort à transmettre, ledit second desdits moyens de liaison fonctionne et ledit premier desdits moyens de liaison ne fonctionne pas ou est bloqué.

Selon l'invention, lesdits moyens intérieurs de liaison peuvent avantageusement comprendre lesdits éléments roulants intérieurs et lesdits moyens extérieurs de liaison peuvent avantageusement comprendre un filetage extérieur du fourreau intermédiaire et un filetage intérieur du fourreau extérieur en prise l'un avec l'autre.

Selon l'invention, lesdits moyens extérieurs de liaison comprennent lesdits éléments roulants extérieurs et lesdits moyens intérieurs de liaison peuvent avantageusement comprendre un filetage extérieur de la tige longitudinale et un filetage intérieur du fourreau intermédiaire en prise l'un avec l'autre.

Selon l'invention, lesdits moyens intérieurs de liaison peuvent avantageusement comprendre lesdits éléments roulants intérieurs et lesdits moyens extérieurs de liaison peuvent avantageusement comprendre lesdits éléments roulants extérieurs.

Selon l'invention, les éléments roulants intérieurs et/ou les éléments roulants extérieurs peuvent avantageusement comprendre des billes disposées entre des filetages intérieur et extérieur, des moyens pour faire recirculer ou repositionner ces billes étant prévus.

Selon l'invention, le fourreau intermédiaire comprend de préférence lesdits moyens pour faire recirculer ou repositionner lesdites billes.

Selon l'invention, les éléments roulants intérieurs et/ou les éléments roulants extérieurs peuvent avantageusement comprendre des rouleaux longitudinaux filetés en prise avec des filetages intérieur et extérieur, des moyens pour faire recirculer ou repositionner ces rouleaux étant prévus.

Selon l'invention, le fourreau intermédiaire comprend de préférence lesdits moyens pour faire recirculer ou repositionner lesdits rouleaux.

Selon l'invention, les éléments roulants intérieurs peuvent avantageusement comprendre des rouleaux longitudinaux filetés, l'angle d'hélice du filetage des rouleaux étant soit égal à l'angle d'hélice du filetage de la tige et différent de l'angle d'hélice du filetage intérieur du fourreau intermédiaire soit égal à l'angle d'hélice du filetage intérieur du fourreau intermédiaire et différent de l'angle d'hélice du filetage de la tige.

Selon l'invention, les rouleaux intérieurs peuvent avantageusement comprendre au moins une partie annulaire à dents d'engrenage qui sont soit en prise avec des dents d'engrenage de la tige soit en prise avec des dents d'engrenage du fourreau intermédiaire.

Selon l'invention, le dispositif peut avantageusement comprendre des bagues intérieures d'extrémité placées de part et d'autre desdits rouleaux intérieurs et présentant des trous longitudinaux dans lesquels sont respectivement engagées des extrémités de ces rouleaux et des moyens formant des butées axiales pour lesdites bagues.

Selon l'invention, les éléments extérieurs de liaison peuvent avantageusement comprendre des rouleaux longitudinaux filetés, l'angle d'hélice du filetage des rouleaux étant soit égal à l'angle d'hélice du filetage intérieur du fourreau extérieur et différent de l'angle d'hélice du filetage extérieur du fourreau intermédiaire soit égal à l'angle d'hélice du filetage extérieur du fourreau intermédiaire et différent de l'angle d'hélice du filetage intérieur du fourreau extérieur.

Selon l'invention, les rouleaux extérieurs peuvent avantageusement comprendre au moins une partie annulaire à dents d'engrenage qui sont soit en prise avec des dents d'engrenage du fourreau extérieur soit en prise avec des dents d'engrenage du fourreau intermédiaire.

Selon l'invention, le dispositif peut avantageusement comprendre des bagues extérieures d'extrémité placées de part et d'autre desdits rouleaux extérieurs et présentant des trous longitudinaux dans lesquels sont respectivement engagées des extrémités de ces rouleaux et des moyens formant des butées axiales pour lesdites bagues.

Selon l'invention, les éléments roulants intérieurs peuvent avantageusement comprendre des rouleaux longitudinaux filetés, l'angle d'hélice du filetage des rouleaux étant égal à l'angle d'hélice du filetage intérieur du fourreau intermédiaire et différent de l'angle d'hélice du filetage de la tige

Selon l'invention, les éléments roulants extérieurs peuvent avantageusement comprendre des rouleaux longitudinaux filetés, l'angle d'hélice du filetage des rouleaux étant égal à l'angle d'hélice du filetage extérieur du fourreau intermédiaire et différent de l'angle d'hélice du filetage intérieur du fourreau extérieur.

Selon l'invention, les rouleaux intérieurs peuvent avantageusement comprendre au moins une partie annulaire à dents d'engrenage qui sont en prise avec des dents d'engrenage du fourreau intermédiaire et les rouleaux extérieurs peuvent avantageusement comprendre au moins une partie annulaire à dents d'engrenage qui sont en prise avec des dents d'engrenage du fourreau intermédiaire.

Selon l'invention, le dispositif comprend de préférence des bagues intérieures d'extrémité placées de part et d'autre desdits rouleaux intérieurs et présentant des trous longitudinaux dans lesquels sont respectivement engagées les extrémités de ces rouleaux et des moyens formant des butées axiales pour lesdites bagues, ainsi que des bagues extérieures d'extrémité placées de part et d'autre desdits rouleaux extérieurs et présentant des trous longitudinaux dans lesquels sont respectivement engagées les extrémités de ces rouleaux et des moyens formant des butées axiales pour lesdites bagues.

Selon l'invention, lesdits moyens de couplage peuvent avantageusement comprendre des moyens d'accouplement permettant de bloquer en rotation sélectivement soit la tige et fourreau intermédiaire, soit le fourreau intermédiaire et le fourreau extérieur, et des moyens de commande de ces moyens d'accouplement.

Selon l'invention, lesdits moyens d'accouplement peuvent avantageusement comprendre une bague déformable radialement, reliée en rotation au fourreau intermédiaire et des moyens agissant sur cette bague pour l'amener sélectivement en appui contre la paroi intérieure du fourreau extérieur ou contre la paroi extérieur de la tige.

Selon l'invention, lesdits moyens de commande peuvent avantageusement comprendre des moyens de détection de couple et/ou des moyens de détection de rotation et/ou des moyens de détection d'effort axial et/ou des moyens de détection de déplacement axial relatif ainsi que des moyens pour activer lesdits moyens d'accouplement lorsque le signal délivré par ces moyens de détection passe un seuil déterminé.

Selon l'invention, lesdits moyens de couplage peuvent avantageusement être constitués par des différences relatives entre les angles d'hélice des filetages de la tige, du fourreau intermédiaire et du fourreau extérieur et/ou des différences relatives entre les profils des filetages de la tige, du fourreau intermédiaire et du fourreau extérieur et/ou des différences relatives entre l'avance par tour des filetages de la tige, du fourreau intermédiaire et du fourreau extérieur.

Selon l'invention, le dispositif peut avantageusement comprendre des moyens de guidage du fourreau extérieur par rapport à ladite tige longitudinale et/ou des moyens de guidage du fourreau intermédiaire par rapport au fourreau extérieur et/ou des moyens de guidage du fourreau intermédiaire par rapport à ladite tige longitudinale.

La présente invention sera mieux comprise à l'étude de différents dispositifs d'actionnement décrits à titre d'exemples non limitatifs et illustrés par le dessin sur lequel :
- la figure 1 représente une coupe longitudinale d'un dispositif d'actionnement selon l'invention ;
- la figure 2 représente une coupe longitudinale d'une application du dispositif d'actionnement de la figure 1 ;
- la figure 3 représente une coupe longitudinale d'une autre application du dispositif d'actionnement de la figure 1 ;
- la figure 4 représente une coupe transversale selon IV-IV du dispositif d'actionnement de la figure 1, dans une première position ;
- la figure 5 représente la même coupe transversale du dispositif d'actionnement de la figure 1, dans une seconde position ;
- la figure 6 représente une coupe longitudinale d'un autre dispositif d'actionnement selon l'invention ;
- la figure 7 représente une coupe longitudinale d'un autre dispositif d'actionnement selon l'invention ;
   la figure 8a représente une coupe longitudinale d'un autre dispositif d'actionnement selon l'invention ;
   la figure 8b représente en coupe longitudinale une vue intérieure partielle du dispositif d'actionnement de la figure 8a ;
- la figure 8c représente une vue en perspective d'une partie d'extrémité de la vue partielle de la figure 8b ;
- la figure 8d représente en coupe longitudinale une autre vue intérieure partielle du dispositif d'actionnement de la figure 8a ;
- la figure 8e représente une vue en perspective d'une partie d'extrémité de la vue partielle de la figure 8d ;
- la figure 9a représente une coupe longitudinale d'un autre dispositif d'actionnement selon l'invention ;
- la figure 9b représente une vue partielle en perspective d'une partie intérieure du dispositif d'actionnement de la figure 9a ;
- la figure 9c représente une vue partielle en perspective d'une autre partie intérieure du dispositif d'actionnement de la figure 9a ;
- et la figure 10 représente une coupe longitudinale d'un autre dispositif d'actionnement selon l'invention.

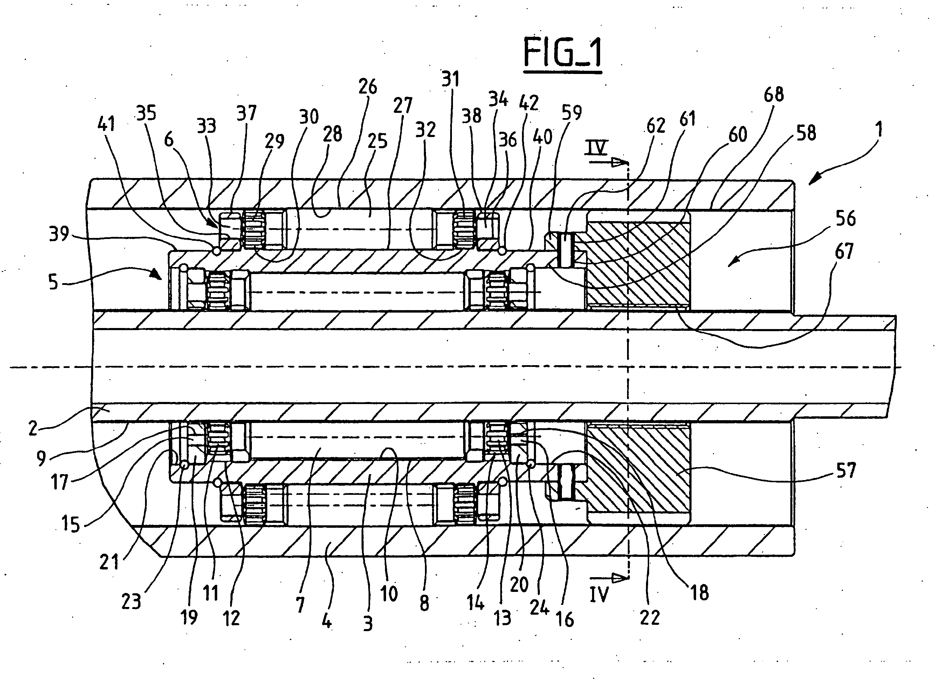

En se reportant à la figure 1, on peut voir qu'on a représenté un dispositif d'actionnement 1 qui comprend une tige cylindrique longitudinale 2, un fourreau cylindrique intermédiaire 3 placé coaxialement, autour et à distance de la tige longitudinale 2, et un fourreau extérieur cylindrique 4 placé coaxialement à la tige longitudinale 2, autour et à distance du fourreau intermédiaire 3.

Le dispositif d'actionnement 1 comprend des moyens intérieurs de liaison à filetage 5 permettant de relier la tige longitudinale 2 et le fourreau intermédiaire 3 et adaptés pour engendrer un mouvement axial de l'un par rapport à l'autre, ainsi que des moyens extérieurs de liaison à filetage 6 permettant de relier le fourreau intermédiaire 3 et le fourreau extérieur 4 et adaptés pour engendrer un mouvement axial de l'un par rapport à l'autre.

Selon l'exemple de la figure 1, les moyens intérieurs de liaison 5 comprennent, de façon connue en soi, une série intérieure de rouleaux longitudinaux 7 qui sont disposés entre la tige longitudinale 2 et le fourreau intermédiaire 3 et répartis périphériquement et qui présentent, sur une bonne partie de leur longueur, un filetage extérieur 8. Les filetages 8 des rouleaux 7 sont en prise avec un filetage extérieur 9 de la tige longitudinale 2 et un filetage intérieur 10 du fourreau intermédiaire 3.

Les rouleaux 7 présentent en outre, dans leur partie d'extrémité, d'une part une partie à dents d'engrenage droites 11 en prise avec des dents d'engrenage 12 ménagées dans une partie annulaire intérieure du fourreau intermédiaire 3 et d'autre part une partie à dents d'engrenage droites 13 en prise avec des dents d'engrenage 14 ménagées dans une partie annulaire intérieure du fourreau intermédiaire 3.

Dans cet exemple, d'une part les parties filetées 8 et les dents d'engrenage 11 et 13 opposées des rouleaux 7 sont séparées par des gorges annulaires et d'autre part la partie filetée 10 et les dents d'engrenage 12 et 14 opposées du fourreau intermédiaire 3 sont aussi séparées par des gorges annulaires.

Les rouleaux longitudinaux 7 présentent également des parties terminales opposées 15 et 16, de diamètres réduits, qui sont engagées respectivement dans des trous longitudinaux 17 et 18 ménagés de façon répartie dans des bagues de maintien 19 et 20 engagées dans des parties cylindriques intérieures terminales 21 et 22 du fourreau intermédiaire 3, ces bagues 19 et 20 étant maintenues de façon opposée par des joncs annulaires 23 et 24 installés dans des gorges des parties cylindriques 21 et 22 du fourreau intermédiaire 3.

D'une part les filetages 8 des rouleaux 7 et le filetage intérieur 10 du fourreau intermédiaire 3 présentent des angles d'hélice identiques et d'autre part les filetages 8 des rouleaux 7 et le filetage 9 de la tige longitudinale 2 présentent des angles d'hélice différents. Ainsi, lorsque la tige longitudinale 2 tourne par rapport au fourreau intermédiaire 3, les rouleaux 7 tournent sur eux-mêmes et roulent autour de la tige longitudinale 2 et dans le fourreau intermédiaire 3, sans se déplacer longitudinalement par rapport au fourreau intermédiaire 3 et en engendrant un mouvement axial de la tige longitudinale 2 par rapport au fourreau intermédiaire 3.

Selon l'exemple de la figure 1, les moyens extérieurs de liaison 6 comprennent, de façon connue en soi, une série extérieure de rouleaux longitudinaux 25 qui sont disposés entre le fourreau intermédiaire 3 et le fourreau extérieur 4 et répartis périphériquement et qui présentent, sur une bonne partie de leur longueur, un filetage extérieur 26. Les filetages 26 des rouleaux 25 sont en prise avec un filetage extérieur 27 du fourreau intermédiaire 3 et un filetage intérieur 28 du fourreau extérieur 4.

Les rouleaux 25 présentent en outre, dans leur partie d'extrémité, d'une part une partie à dents d'engrenage droites 29 en prise avec des dents d'engrenage 30 ménagées dans une partie annulaire extérieure du fourreau intermédiaire 3 et d'autre part une partie à dents d'engrenage droites 31 en prise avec des dents d'engrenage 32 ménagées dans une partie annulaire extérieure du fourreau intermédiaire 4.

Dans cet exemple, d'une part les parties filetées 26 et les dents d'engrenage 29 et 31 opposées des rouleaux 25 sont séparées par des gorges annulaires et d'autre part la partie filetée 27 et les dents d'engrenage 30 et 32 opposées du fourreau intermédiaire 3 sont aussi séparées par des gorges annulaires.

Les rouleaux longitudinaux 25 présentent également des parties terminales opposées 33 et 34, de diamètres réduits, qui sont engagées respectivement dans des trous longitudinaux 35 et 36 ménagés de façon répartie dans des bagues de maintien 37 et 38 engagées dans des parties cylindriques extérieures terminales 39 et 40 du fourreau intermédiaire 3, ces bagues 37 et 38 étant maintenues de façon opposée par des joncs annulaires 41 et 42 installés dans des gorges des parties cylindriques 39 et 40 du fourreau intermédiaire 3.

D'une part les filetages 26 des rouleaux 25 et le filetage extérieur 27 du fourreau intermédiaire 3 présentent des angles d'hélice identiques et d'autre part les filetages 26 des rouleaux 25 et le filetage 28 du fourreau extérieur 4 présentent des angles d'hélice différents. Ainsi, lorsque le fourreau extérieur 4 tourne par rapport au fourreau intermédiaire 3, les rouleaux 25 tournent sur eux-mêmes et roulent autour du fourreau intermédiaire 3 et dans le fourreau extérieur 4, sans se déplacer longitudinalement par rapport au fourreau intermédiaire 3 et en engendrant un mouvement axial du fourreau intermédiaire 3 par rapport au fourreau extérieur 4.

La course longitudinale entre la tige longitudinale 2 et le fourreau extérieur 4 est définie par rapport à la longueur du filetage 9 de la tige longitudinale 2 et/ou par rapport à la longueur du filetage intérieur 28 du fourreau extérieur 4, cette course dépendant de l'état bloqué ou en fonctionnement des moyens intérieurs de liaison 5 et/ou des moyens extérieurs de liaison 6.

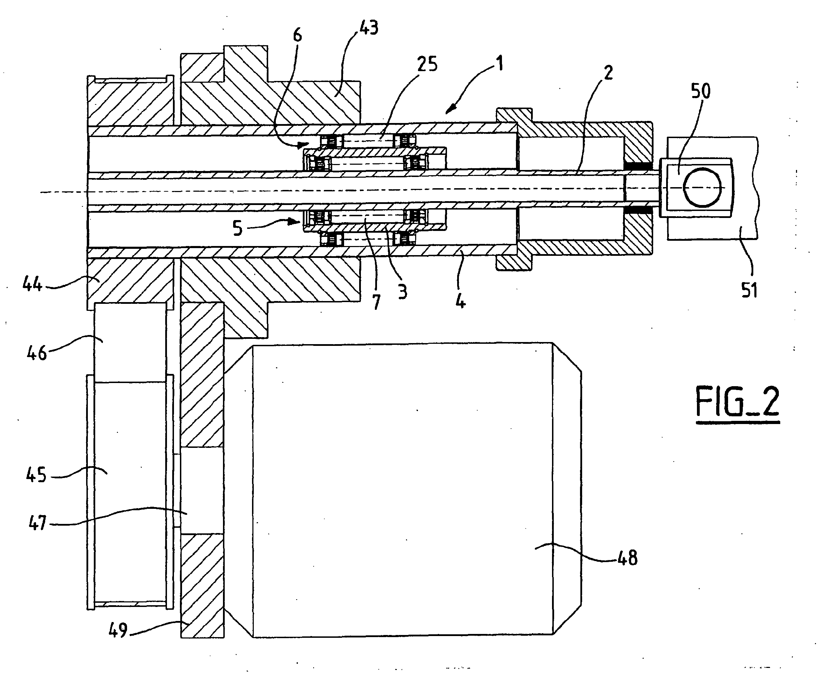

En se reportant à la figure 2, on peut voir qu'on a représenté une application du dispositif d'actionnement 1 de la figure 1, dans laquelle le fourreau extérieur 4 est porté par une boîte 43 de paliers à butées et porte une poulie 44 qui est reliée à une poulie d'entraînement 45 par l'intermédiaire d'une courroie 46, la poulie d'entraînement 45 étant montée à l'extrémité de l'arbre d'entraînement 47 d'un moteur 48 porté par un support 49 portant la boîte 43. Une extrémité de la tige longitudinale 2 présente un embout de liaison 50 adapté pour être relié à un organe 51 à déplacer par rapport au support 49 et immobilisant en rotation la tige longitudinale 2.

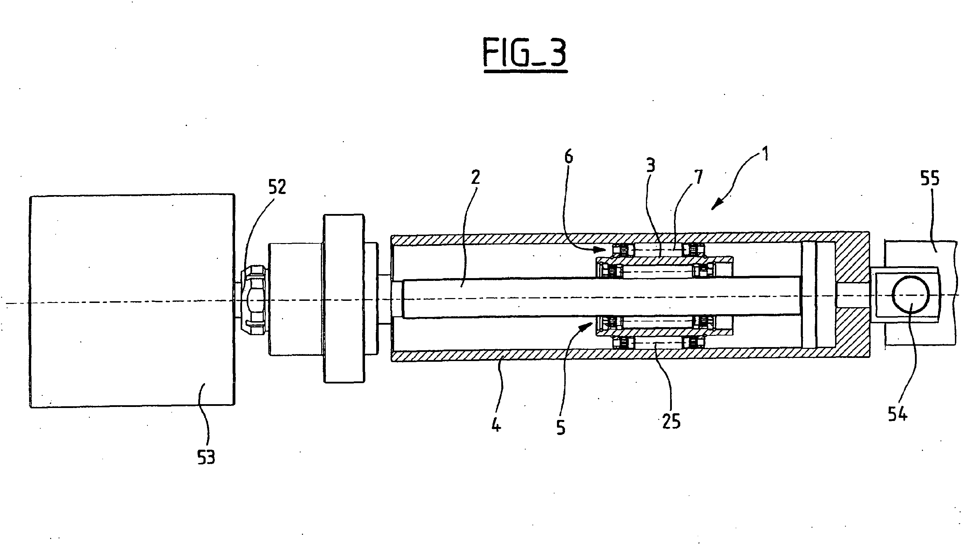

En se reportant à la figure 3, on peut voir qu'on a représenté une autre application du dispositif d'actionnement 1 de la figure 1 dans laquelle, à l'inverse de l'application de la figure 2, une extrémité de la tige longitudinale 2 est reliée à l'arbre d'entraînement 52 d'un moteur 53, aligné avec la tige longitudinale 2, le fourreau extérieur 4 portant, à l'opposé du moteur 53, un embout de liaison 54 adapté pour être relié à un organe 55 à déplacer par rapport à un support portant le carter du moteur 53 et immobilisant en rotation le fourreazu extérieur 4.

Le dispositif d'actionnement 1 qui vient d'être décrit comprend en outre des moyens de couplage qui permettent de relier en rotation sélectivement la tige longitudinale 2 et le fourreau intermédiaire 3 ou le fourreau intermédiaire 3 et le fourreau extérieur 4.

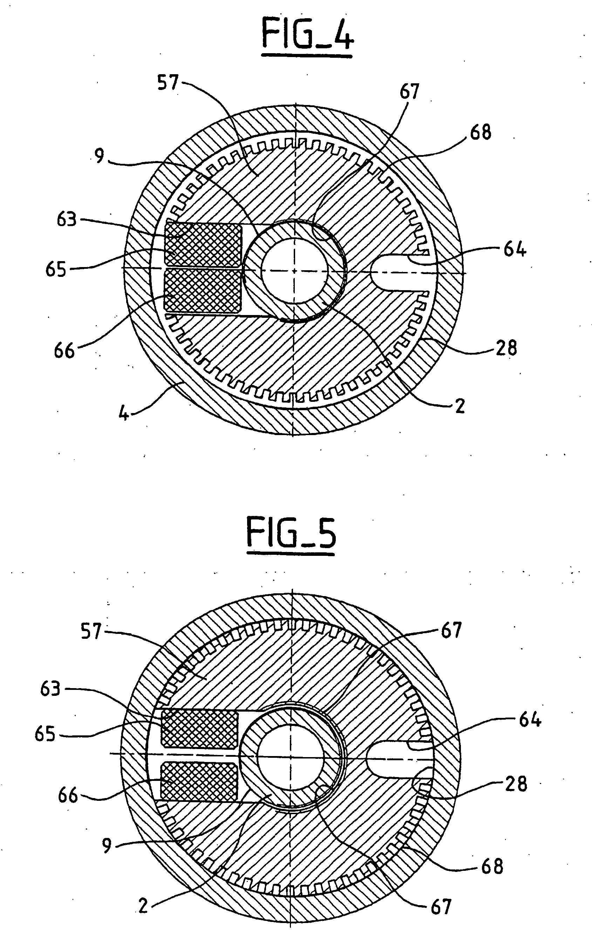

Dans la variante représentée sur la figure 1, complétée par les figures 4 et 5, les moyens de couplage sont constitués par des moyens d'accouplement 56 qui comprennent une bague 57 qui est disposée au-delà du fourreau intermédiaire 3, autour de la tige longitudinale 2 et à l'intérieur du fourreau extérieur 4. Cette bague 57 présente une épaisseur radiale légèrement inférieure à la distance séparant la tige longitudinale 2 et le fourreau extérieur 4. Le fourreau intermédiaire 3 présente un prolongement annulaire 58 et la bague 57 présente un épaulement latéral annulaire 59 engagé autour du prolongement 58. Le prolongement 58 et l'épaulement 59 présentent respectivement deux passages radiaux opposés 60 et 61 correspondants dans lesquels sont disposés des pions radiaux de liaison 62 qui sont fixés dans les passages 60 mais libres dans les passages 61.

La bague 57 présente une fente longitudinale 63 et, de façon diamétralement opposée, un évidemment longitudinal extérieur 64 de telle sorte que la bague 57 est radialement déformable.

Dans sa fente 63, la bague 57 porte des éléments électromagnétiques 65 et 66 succeptibles d'être activés par des moyens non représentés.

La bague 57 est dimensionnée de façon à occuper les deux positions de fonctionnement suivantes.

Lorsque les éléments électromagnétiques 65 et 66 ne sont pas activés, la bague 57 se trouve dans une première position d'actionnement dans laquelle elle enserre et pince la tige longitudinale 2 dans son passage intérieur 67, sa surface périphérique 68 étant alors distante de la surface intérieure du fourreau extérieur 4.

Dans cette première position d'actionnement à laquelle correspond un premier mode de fonctionnement, la tige longitudinale 2 et le fourreau intermédiaire 7 sont liés en rotation de telle sorte que les moyens intérieurs de liaison 5 sont bloqués ou inactifs. Le mouvement de rotation relatif de la tige longitudinale 2 par rapport au fourreau extérieur 4 tel qu'il résulte par exemple des applications décrites en référence aux figures 2 et 3, engendrant un déplacement longitudinal de la tige longitudinale 2 par rapport au fourreau extérieur 4, est obtenu au travers des moyens extérieurs de liaison 6, c'est-à-dire grâce à la série de rouleaux extérieurs 25.

Lorsque les éléments électromagnétiques 65 et 66 sont activés, la bague 57 se trouve dans une seconde position d'actionnement dans laquelle la bague 57 est déformée radialement vers l'extérieur, de telle sorte que sa surface périphérique 68 est en contact sur la surface intérieure du fourreau extérieur 4, son passage intérieur 67 étant alors à distance de la tige longitudinale 2.

Dans cette seconde position d'entraînement à laquelle correspond un second mode de fonctionnement, le fourreau intermédiaire 3 et le fourreau extérieur 4 sont liés en rotation de telle sorte que les moyens extérieurs de liaison 6 sont bloqués ou inactifs. Le mouvement de rotation relatif de la tige longitudinale 2 par rapport au fourreau extérieur 4 tel qu'il résulte par exemple des applications décrites en référence aux figures 2 et 3, engendrant un déplacement longitudinal de la tige longitudinale 2 par rapport au fourreau extérieur 4, est obtenu au travers des moyens intérieurs de liaison 5, c'est-à-dire grâce à la série de rouleaux intérieurs 25.

Dans un exemple d'utilisation, la première position d'entraînement de la bague 57 des moyens d'accouplement 56 peut correspondre à un mode de fonctionnement courant ou normal du dispositif d'actionnement 1.

Dans la mesure où les moyens extérieurs de liaison 6 deviendraient défectueux, on peut alors activer les éléments électromagnétiques 65 et 66 de façon à placer la bague 57 des moyens d'accouplement 56 dans sa deuxième position d'entraînement précitée pour rendre inactifs les moyens extérieurs de liaison 6 et rendre actifs les moyens intérieurs de liaison 5 et ainsi passer du premier mode de fonctionnement précité au second mode de fonctionnement précité.

Le passage du premier mode de fonctionnement précité au second mode de fonctionnement précité peut être engendré par détection du passage d'un seuil déterminé.

Pour cela, le moteur 48 de l'application décrite en référence à la figure 2 ou le moteur 53 de l'application décrite en référence à la figure 3 peuvent être équipés de capteurs reliés à des circuits électroniques non représentés.

Ces circuits électroniques peuvent être programmés de telle sorte que, lorsque le couple d'entrée ou moteur, délivré par l'axe 47 du moteur 48 et appliqué au fourreau extérieur 4 ou délivré par l'axe 52 du moteur 53 et appliqué à la tige longitudinale 2, dépasse un seuil déterminé préprogrammé, fonction de l'effort à transmettre, lesdits circuits électroniques délivrent un signal de commande des éléments électromagnétiques 65 et 66 tel que la bague 57 des moyens d'accouplement 56 passe de sa première position de fonctionnement précitée à sa seconde position de fonctionnement précitée.

Dans une autre variante de réalisation, telle que représentée sur les figures 2 et 3, les moyens de couplage 56 peuvent être supprimés et les moyens d'accouplement peuvent être constitués par des différences relatives entre les angles d'hélice des filetages de la tige, du fourreau intermédiaire et du fourreau extérieur et/ou des différences relatives entre les profils des filetages de la tige, du fourreau intermédiaire et du fourreau extérieur et/ou des différences relatives entre l'avance par tour des filetages de la tige, du fourreau intermédiaire et du fourreau extérieur.

Dans cette autre variante, les différences relatives mentionnées ci-dessus peuvent être adaptées pour que ce soient prioritairement les moyens de liaison extérieurs 6 qui fonctionnent et que les moyens de liaison intérieurs 5 restent bloqués par construction. En cas de grippage ou de blocage des moyens de liaison extérieurs 6, le couple d'entrée ou moteur, délivré par l'axe 47 du moteur 48 et appliqué au fourreau extérieur 4 ou délivré par l'axe 52 du moteur 53 et appliqué à la tige longitudinale 2, vient à passer au-dessus d'un seuil déterminé par construction, fonction de l'effort à transmettre, tel que les moyens de liaison intérieurs 5 prennent le relais et se mettent à fonctionner.

Il résulte de ce qui précède que les moyens de liaison 5 et 6 peuvent les uns établir un mode de fonctionnement courant ou normal du dispositif d'actionnement 1 et les autres établir un mode de fonctionnement de substitution ou de sécurité palliant une dégradation du fonctionnement des premiers.

Le dispositif d'actionnement 1 qui vient d'être décrit peut présenter différentes variantes d'exécution, qui peuvent aussi comprendre des moyens de couplage réalisés par des moyens d'accouplement tels que les moyens 56 ou réalisés par construction en mettant en oeuvre les différences relatives précitées.

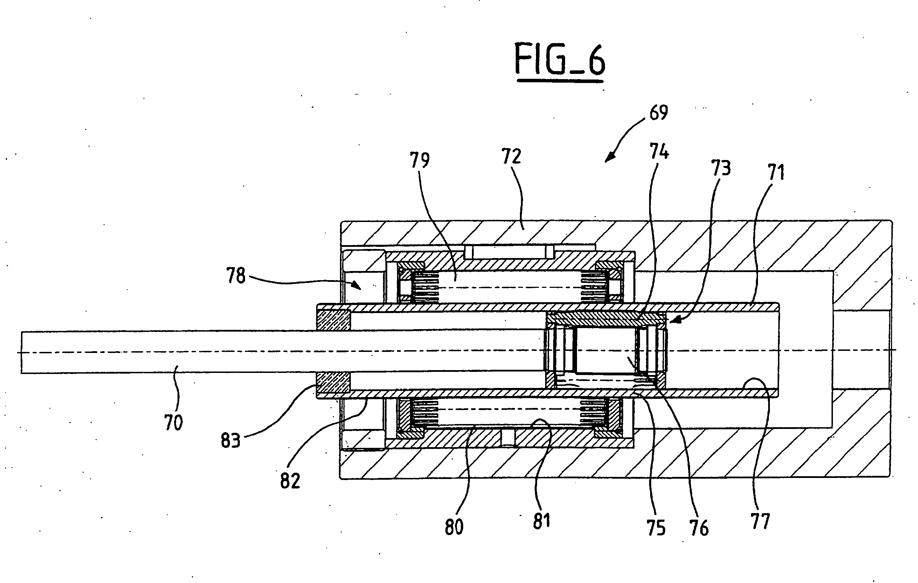

En se reportant à la figure 6, on peut voir qu'on a représenté un dispositif d'actionnement 69 qui comprend une tige longitudinale 70, un fourreau intermédiaire 71 et un fourreau extérieur 72.

Entre la tige longitudinale 70 et le fourreau intermédiaire 71, sont prévus des moyens intérieurs de liaison 73 qui comprennent une série intérieure de rouleaux longitudinaux 74 qui sont installés de façon inverse par rapport aux rouleaux 7 des moyens de liaison intérieurs 5 du dispositif d'actionnement en 1. Il s'ensuit que d'une part les filetages 75 des rouleaux 74 et le filetage extérieur 76 de la tige longitudinale 70 présentent des angles d'hélice identiques et d'autre part les filetages 75 des rouleaux 74 et le filetage intérieur 77 du fourreau intermédiaire 71 présentent des angles d'hélice différents.

Ainsi, lorsque la tige longitudinale 70 tourne par rapport au fourreau intermédiaire 71, les rouleaux 74 tournent sur eux-mêmes et roulent autour de la tige longitudinale 70 et dans le fourreau intermédiaire 71, sans se déplacer par rapport à la tige longitudinale 70 et en engendrant un mouvement axial de la tige longitudinale 70 par rapport au fourreau intermédiaire 71.

Entre le fourreau intermédiaire 71 et le fourreau extérieur 72, sont prévus des moyens extérieurs de liaison 78 qui comprennent une série extérieure de rouleaux longitudinaux 79 qui sont installés de façon inverse par rapport aux rouleaux 25 des moyens extérieurs de liaison 6 du dispositif d'actionnement 1. Il s'ensuit que d'une part les filetages 80 des rouleaux 79 et le filetage intérieur 81 du fourreau extérieur 72 présentent des angles d'hélice identiques et d'autre part les filetages 80 des rouleaux 79 et le filetage extérieur 82 du fourreau intermédiaire 71 présentent des angles d'hélice différents.

Ainsi, lorsque le fourreau intermédiaire 71 tourne par rapport au fourreau extérieur 72, les rouleaux 79 tournent sur eux-mêmes et roulent autour du fourreau intermédiaire 71 et dans le fourreau extérieur 72, sans se déplacer longitudinalement par rapport au fourreau extérieur 72 et en engendrant un mouvement axial du fourreau intermédiaire 71 par rapport au fourreau extérieur 72.

Dans cette variante d'exécution représentée sur la figure 6, la course de la tige 70 par rapport au fourreau extérieur 72 est définie par rapport à la longueur du filetage intérieur 77 et par rapport à la longueur du filetage extérieur 82 du fourreau intermédiaire 71.

En outre, le fourreau intermédiaire 71 est équipé, dans l'une de ses parties d'extrémité, d'une bague 83 de guidage longitudinal qui entoure une partie cylindrique lisse de la tige longitudinale 70.

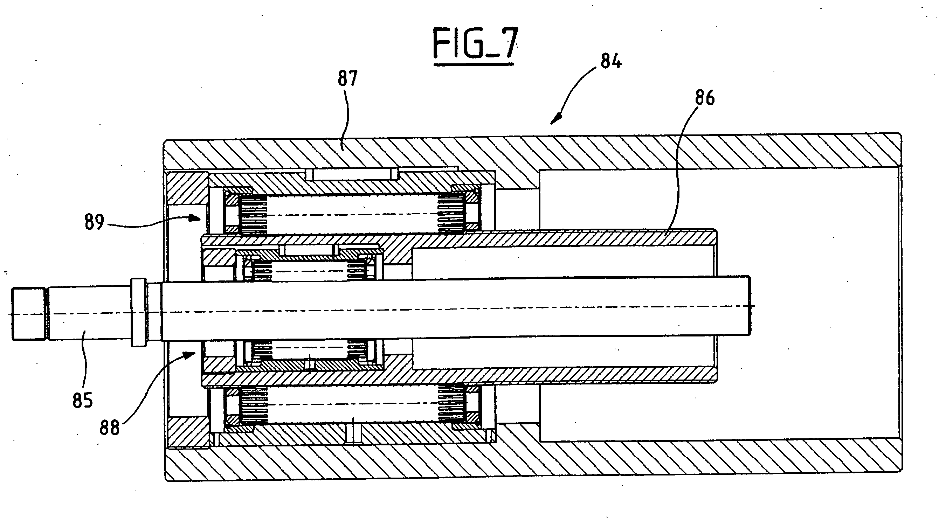

En se reportant à la figure 7, on peut voir qu'on a représenté un dispositif d'actionnement 84 qui comprend une tige longitudinale 85, un fourreau intermédiaire 86 et un fourreau extérieur 87.

Entre la tige longitudinale 85 et le fourreau intermédiaire 86 sont prévus des moyens intérieurs de liaison 88 qui correspondent aux moyens intérieurs de liaison 5 du dispositif d'actionnement 1.

Entre le fourreau intermédiaire 86 et le fourreau extérieur 87, sont prévus des moyens extérieurs de liaison 89 qui correspondent aux moyens extérieurs de liaison 78 du dispositif d'actionnement 69.

Ainsi, la course de la tige longitudinale 85 par rapport au fourreau extérieur 87 est définie par rapport à la longueur du filetage de la tige longitudinale 85 et par rapport à la longueur du filetage extérieur du fourreau intermédiaire 86.

Dans une variante d'exécution non représentée, inverse de celle de la figure 6, les moyens intérieurs de liaison 88 pourraient être remplacés par les moyens intérieurs de liaison 73 du dispositif d'actionnement 69 et les moyens extérieurs de liaison 89 pourraient être remplacés par les moyens extérieurs de liaison 6 du dispositif d'actionnement 1. Dans ce cas, la course de la tige longitudinale 85 par rapport au fourreau extérieur 87 serait définie par rapport à la longueur du filetage intérieur du fourreau intermédiaire 86 et par rapport à la longueur du filetage intérieur du fourreau extérieur 87.

Dans d'autres variantes d'exécution, les moyens intérieurs de couplage et/ou les moyens extérieurs de couplage des dispositifs d'actionnement qui viennent d'être décrits, à rouleaux engrenés et bagues de maintien, peuvent être remplacés par des moyens intérieurs de liaison et/ou des moyens extérieurs de liaison à recirculation de rouleaux et/ou à recirculation de billes.

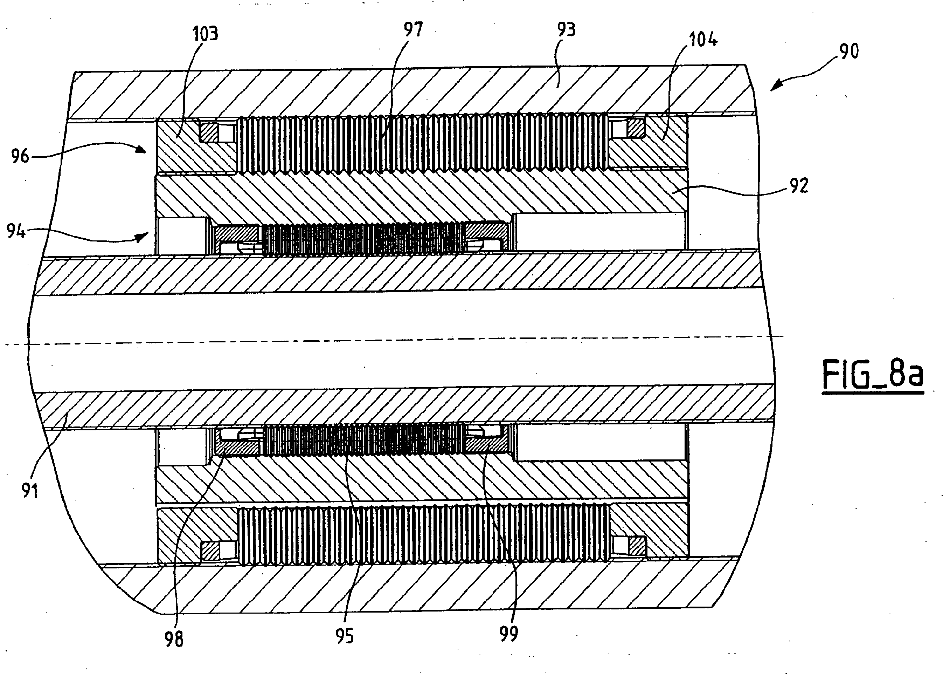

En se reportant aux figures 8a à 8e, on peut voir en particulier qu'on a représenté un dispositif d'actionnement 90 qui comprend une tige longitudinale 91, un fourreau intermédiaire 92 et un fourreau extérieur 93.

Entre la tige longitudinale 91 et le fourreau intermédiaire 92, sont prévus des moyens intérieurs de liaison 94 à recirculation d'une série intérieure de rouleaux longitudinaux 95 qui présentent des filetages en prise avec un filetage de la tige longitudinale 91 et un filetage intérieur du fourreau intermédiaire 92.

Entre le fourreau intermédiaire 92 et le fourreau extérieur 93, sont prévus des moyens extérieurs de liaison 96 à recirculation d'une série extérieure de rouleaux longitudinaux 97 qui présentent des filetages en prise avec un filetage extérieur du fourreau intermédiaire 92 et un filetage intérieur du fourreau extérieur 93.

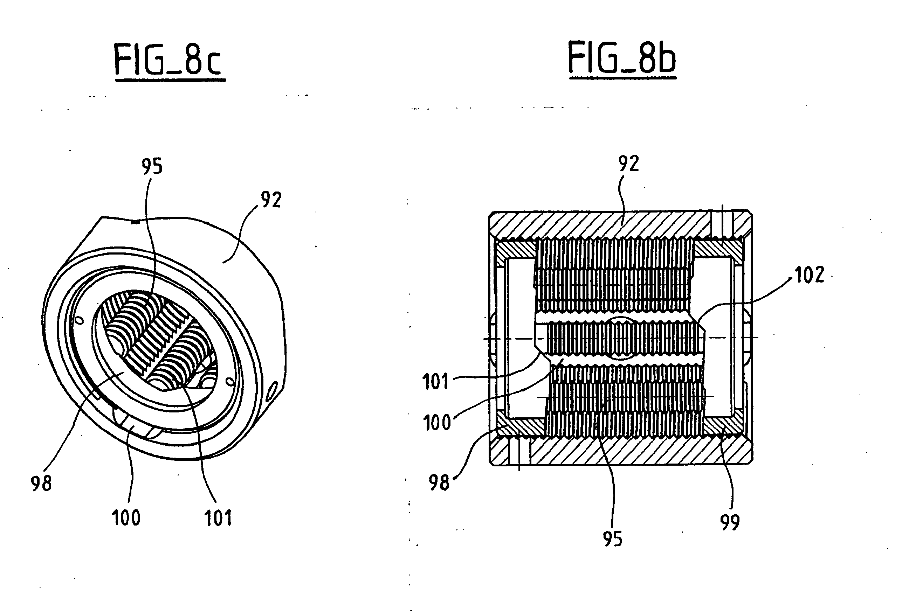

Comme le montrent plus particulièrement les figures 8a, 8b et 8c, le fourreau intermédiaire 92 porte intérieurement des bagues de guidage 98 et 99 entre lesquelles est défini un couloir annulaire de guidage. Afin d'assurer la recirculation des rouleaux intérieurs 95, par tour dans ce couloir annulaire, il peut être avantageux par exemple que le fourreau intermédiaire 92 présente une rainure longitudinale intérieure 100 et les bagues 98 et 99 présentent, dans ce couloir annulaire, des faces inclinées 101 et 102, disposées de telle sorte que, lorsque la tige longitudinale 91 tourne par rapport au fourreau intermédiaire 92, les rouleaux intérieurs 95 tournent sur eux-mêmes et, successivement, sautent longitudinalement d'un pas du filetage intérieur du fourreau intermédiaire 92 en passant dans la rainure longitudinale 100 et en étant guidés par les faces inclinées 101 et 102 des bagues de guidage 98 et 99.

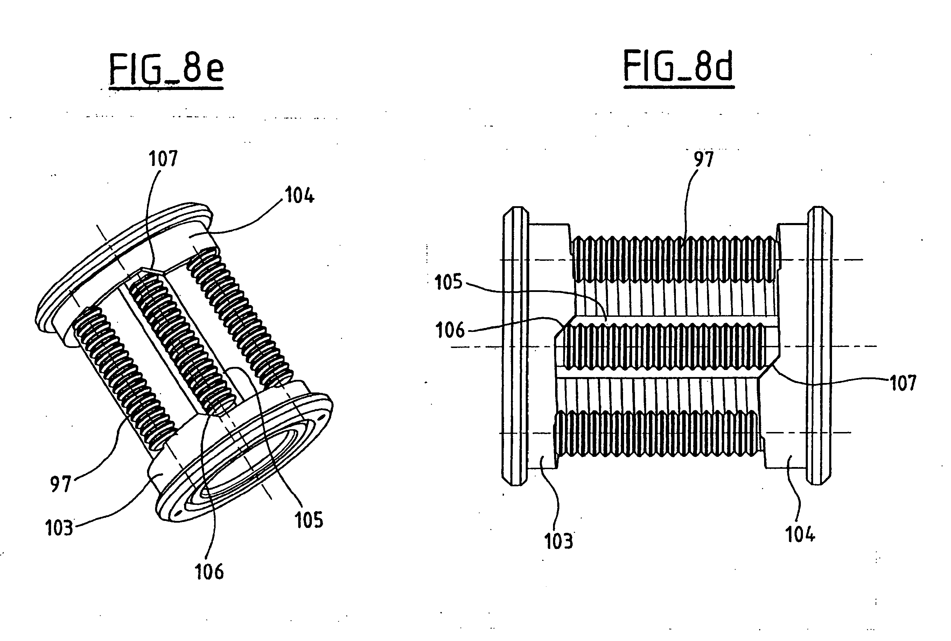

Comme le montrent plus particulièrement les figures 8a, 8d et 8e, le fourreau intermédiaire 92 porte extérieurement des bagues de guidage 103 et 104 entre lesquelles est défini un couloir annulaire de guidage. Afin d'assurer la recirculation des rouleaux extérieurs 95, par tour dans ce couloir annulaire, il peut être avantageux par exemple que le fourreau intermédiaire 92 présente une rainure longitudinale intérieure 105 et les bagues 103 et 104 présentent, dans ce couloir annulaire, des faces inclinées 106 et 107, disposées de telle sorte que, lorsque le fourreau intermédiaire 92 tourne par rapport au fourreau extérieur 93, les rouleaux extérieurs 97 tournent sur eux-mêmes et, successivement, sautent longitudinalement d'un pas du filetage extérieur du fourreau intermédiaire 92 en passant dans la rainure longitudinale 105 et en étant guidés par les faces inclinées 106 et 107 des bagues de guidage 106 et 107.

Dans cet exemple, la course de la tige longitudinale 91 par rapport au fourreau extérieur 93 est définie par la longueur du filetage de la tige longitudinale 91 et la longueur du filetage intérieur du fourreau extérieur 93, le fourreau intermédiaire 92 présentant les moyens de recirculation des rouleaux intérieurs 95 et les moyens de recirculation des rouleaux extérieurs 97.

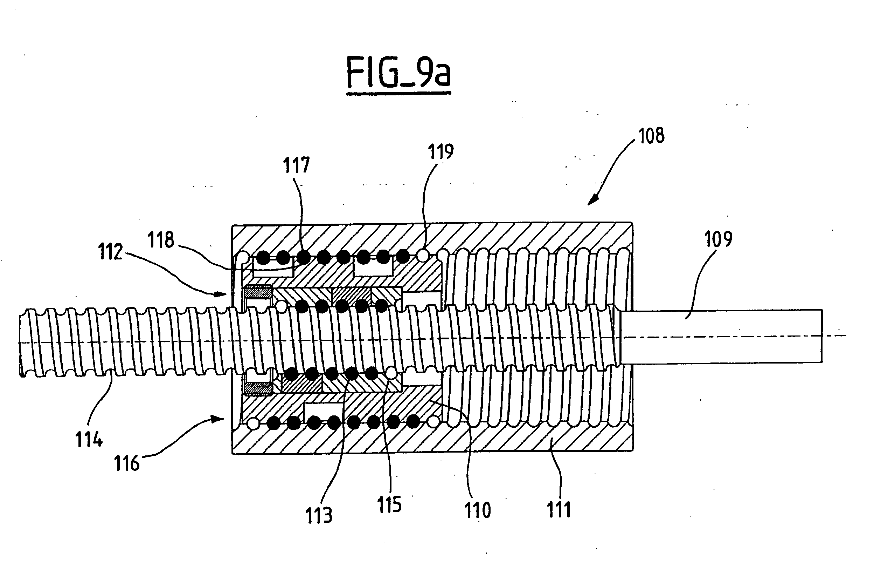

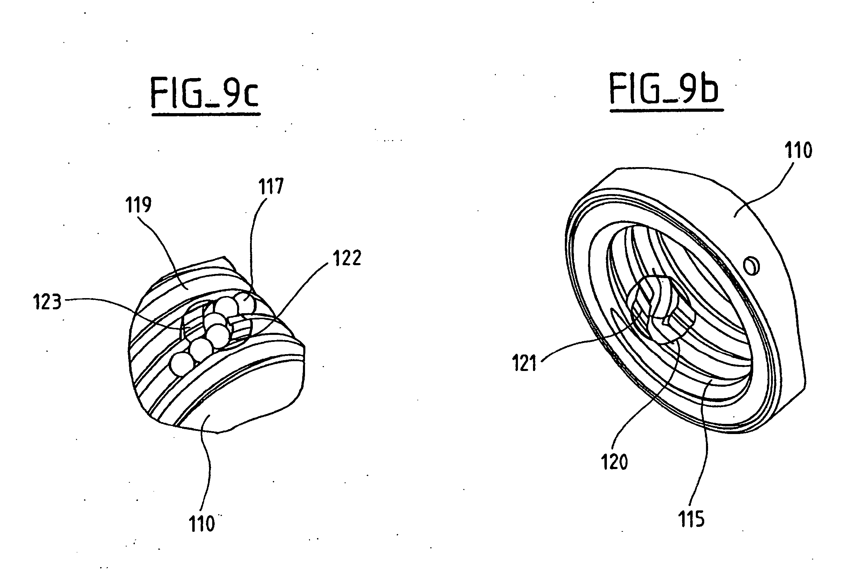

En se reportant aux figures 9a, 9b et 9c, on peut voir aussi qu'on a représenté un dispositif d'actionnement 108 qui comprend une tige longitudinale 109, un fourreau intermédiaire 110 et un fourreau extérieur 111.

Entre la tige longitudinale 109 et le fourreau intermédiaire 110, sont prévus des moyens intérieurs de liaison 112 à recirculation de séries intérieures de billes 113, la tige longitudinale 109 présentant un filetage 114 et le fourreau intermédiaire 110 présentant un filetage intérieur 115, adaptés pour recevoir ces billes intérieures 113.

Entre le fourreau intermédiaire 110 et le fourreau extérieur 111, sont prévus des moyens extérieurs de liaison 116 à recirculation de séries extérieures de billes 117, le fourreau intermédiaire 110 présentant un filetage 118 et le fourreau extérieur 111 présentant un filetage 119, adaptés pour recevoir ces billes extérieures 117.

Comme le montrent plus précisément les figures 9a et 9b, afin d'assurer la recirculation des billes intérieures 115, il peut être avantageux par exemple que les filets intérieurs 115 du fourreau intermédiaire 110 présentent des trous radiaux 120 formés sur deux filets consécutifs et des pions de déviation 121 placés et orientés à l'intérieur de ces trous 120, de telle sorte que les billes 115 de chaque série de billes puissent être recyclées sur un tour en étant déviées par les pions 121 et en passant dans le trou 120 correspondant et au-dessus du filet correspondant de la tige longitudinale 109.

Comme le montrent plus précisément les figures 9a et 9c, afin d'assurer la recirculation des billes extérieures 117, il peut être avantageux par exemple que les filets extérieurs 118 du fourreau intermédiaire 110 présentent des trous radiaux 122 formés sur deux filets consécutifs et des pions de déviation 123 placés et orientés à l'intérieur de ces trous 122, de telle sorte que les billes 117 de chaque série de billes puissent être recyclées sur un tour en étant déviées par les pions 123 et en passant dans le trou 122 correspondant et au-dessus du filet correspondant du fourreau extérieur 111.

Dans cet exemple, la course de la tige longitudinale 109 par rapport au fourreau extérieur 111 est définie par rapport à la longueur du filetage de la tige longitudinale 109 et par rapport à la longueur du filetage intérieur du fourreau extérieur 111, le fourreau intermédiaire 110 présentant les moyens de recirculation des billes intérieures 113 et les moyens de recirculation des billes extérieures 117.

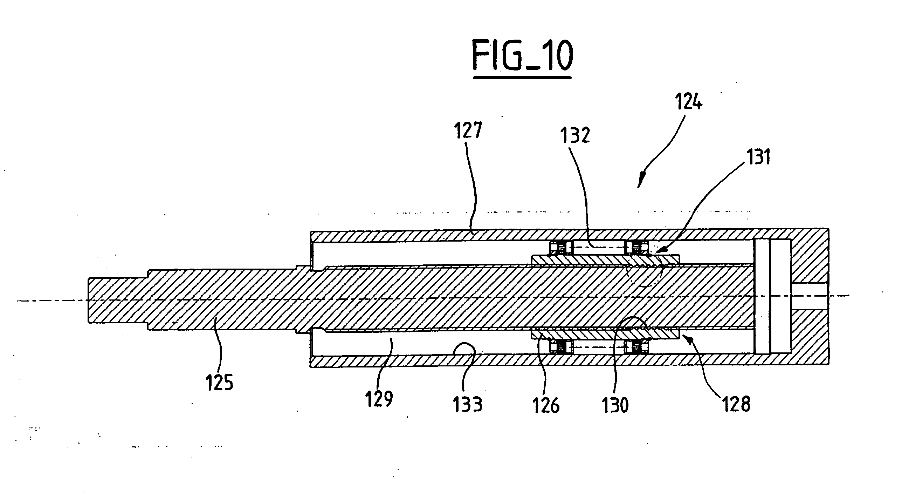

En se reportant à la figure 10, on peut voir qu'on a représenté un autre dispositif d'actionnement 124 qui comprend une tige longitudinale 125, un fourreau intermédiaire 126 et un fourreau extérieur 127.

Entre la tige longitudinale 125 et le fourreau intermédiaire 126, sont prévus des moyens intérieurs de liaison 128 qui sont constitués, dans cet exemple, non plus par des éléments roulants mais par un filetage 129 ménagé sur la tige longitudinale 125 qui est en prise directe avec un filetage intérieur 130 du fourreau intermédiaire 126.

Entre le fourreau intermédiaire 126 et le fourreau extérieur 127, sont prévus des moyens extérieurs de liaison 131 à rouleaux longitudinaux 132, qui correspondent aux moyens extérieurs de liaison 6 du dispositif d'actionnement 1 précèdemment décrit.

Dans cet exemple, la course de la tige longitudinale 125 par rapport au fourreau extérieur 127 est définie par rapport à la longueur du filetage 129 de la tige longitudinale 125 et par rapport à la longueur du filetage intérieur 133 en prise avec le filetage des rouleaux 132.

Dans une variante d'exécution inverse, les moyens intérieurs de liaison 128 pourraient être constitués par les moyens intérieurs de liaison 5 du dispositif d'actionnement 1 et les moyens extérieurs de liaison 131 pourraient être constitués par un filetage extérieur du fourreau intermédiaire 126 en prise directe avec le filetage intérieur 133 du fourreau extérieur 127.

Dans d'autres variantes de réalisation, les moyens de liaison 128 ou 131, à éléments de liaison intermédiaires, pourraient être remplacés par l'un quelconque de ceux décrits en référence aux figures 6 à 9.

La présente invention ne se limite pas aux exemples ci-dessus décrits.

On pourrait en effet établir un mode de fonctionnement courant ou normal et un mode de fonctionnement de substitution ou de sécurité dans tout dispositif d'actionnement comprenant des moyens intérieurs de liaison entre une tige longitudinale et un fourreau intermédiaire et des moyens extérieurs de liaison entre ce fourreau intermédidiare et un fourreau extérieur, choisis indifféremment en particulier parmi ceux qui viennent d'être décrits, les changements de mode de fonctionnement pouvant être assurés grâce à des moyens de couplage résultant de moyens d'accouplement additionels ou résultant des conditions de fonctionnement respectives et complémentaires des moyens intérieurs de liaison et des moyens extérieurs de liaison.

## Revendications

1. Dispositif d'actionnement comprenant :
une tige longitudinale (2, 70, 85, 91, 109, 125)
un fourreau intermédiaire (3, 75, 86, 92, 110, 126) placé coaxialement à et autour de ladite tige,
un fourreau extérieur (4, 72, 93, 111, 127) placé coaxialement à ladite tige et autour dudit fourreau intermédiaire,
des moyens intérieurs de liaison à filetage (5, 73, 94, 112, 128) permettant de relier la tige longitudinale et le fourreau intermédiaire et adaptés pour engendrer un mouvement axial de l'un par rapport à l'autre,
characterisé en ce que il comprend
des moyens extérieurs de liaison à filetage (6, 78, 89, 96, 116, 131) permettant de relier le fourreau intermédiaire et le fourreau extérieur et adaptés pour engendrer un mouvement axial de l'un par rapport à l'autre,
lesdits moyens intérieurs de liaison comprenant des éléments roulants intérieurs en prise d'une part avec le filetage extérieur de la tige et le filetage intérieur du fourreau intermédiaire et/ou lesdits moyens extérieurs de liaison comprenant des éléments roulants extérieurs en prise d'une part avec le filetage extérieur du fourreau intermédiaire et le filetage intérieur du fourreau extérieur,
et comprenant des moyens de couplage (5,6 ; 56 ; 57 ; 131, 129, 130) permettant de relier en rotation sélectivement la tige et le fourreau intermédiaire ou le fourreau intermédiaire et le fourreau extérieur.

2. Dispositif d'actionnement selon la revendication 1, **caractérisé par le fait que** lesdits moyens de couplage sont tels que pour un effort axial à transmettre donné, un premier desdits moyens de liaison fonctionne et le second ne fonctionne pas ou est bloqué et que lorsque le couple d'entrée ou moteur, appliqué à la tige ou au fourreau extérieur, dépasse au moins un seuil déterminé fonction de l'effort à transmettre, ledit second desdits moyens de liaison fonctionne et ledit premier desdits moyens de liaison ne fonctionne pas ou est bloqué.

3. Dispositif d'actionnement selon l'une des revendications 1 et 2, **caractérisé par le fait que** lesdits moyens intérieurs de liaison (128) comprennent lesdits éléments roulants intérieurs et lesdits moyens extérieurs de liaison (131) comprennent un filetage extérieur du fourreau intermédiaire et un filetage intérieur du fourreau extérieur en prise l'un avec l'autre.

4. Dispositif d'actionnement selon l'une des revendications 1 et 2, **caractérisé par le fait que** lesdits moyens extérieurs de liaison (131) comprennent lesdits éléments roulants extérieurs et lesdits moyens intérieurs de liaison (128) comprennent un filetage extérieur de la tige longitudinale et un filetage intérieur du fourreau intermédiaire en prise l'un avec l'autre.

5. Dispositif d'actionnement selon l'une des revendications 1 et 2, **caractérisé par le fait que** lesdits moyens intérieurs de liaison (5 ; 73 ; 88 ; 94 ; 112)) comprennent lesdits éléments roulants intérieurs et lesdits moyens extérieurs de liaison (6 ; 78 ; 89 ; 96 ; 116) comprennent lesdits éléments roulants extérieurs.

6. Dispositif d'actionnement selon l'une quelconque des revendications précédentes, **caractérisé par le fait que** les éléments roulants intérieurs et/ou les éléments roulants extérieurs comprennent des billes disposées entre des filetages intérieur et extérieur et qu'il comprend des moyens pour faire recirculer ou repositionner ces billes.

7. Dispositif d'actionnement selon la revendication 6, **caractérisé par le fait que** le fourreau intermédiaire comprend lesdits moyens pour faire recirculer ou repositionner lesdites billes.

8. Dispositif d'actionnement selon l'une quelconque des revendications précédentes, **caractérisé par le fait que** les éléments roulants intérieurs et/ou les éléments roulants extérieurs comprennent des rouleaux longitudinaux filetés en prise avec des filetages intérieur et extérieur et qu'il comprend des moyens pour faire recirculer ou repositionner ces rouleaux.

9. Dispositif d'actionnement selon la revendication 8, **caractérisé par le fait que** le fourreau intermédiaire comprend lesdits moyens pour faire recirculer ou repositionner lesdits rouleaux.

10. Dispositif d'actionnement selon l'une quelconque des revendications précédentes, **caractérisé par le fait que** les éléments roulants intérieurs comprennent des rouleaux longitudinaux filetés, l'angle d'hélice du filetage des rouleaux étant soit égal à l'angle d'hélice du filetage de la tige et différent de l'angle d'hélice du filetage intérieur du fourreau intermédiaire soit égal à l'angle d'hélice du filetage intérieur du fourreau intermédiaire et différent de l'angle d'hélice du filetage de la tige.

11. Dispositif d'actionnement selon la revendication 10, **caractérisé par le fait que** les rouleaux intérieurs comprennent au moins une partie annulaire à dents d'engrenage qui sont soit en prise avec des dents d'engrenage de la tige soit en prise avec des dents d'engrenage du fourreau intermédiaire.

12. Dispositif d'actionnement selon l'une des revendications 10 et 11, **caractérisé par le fait qu'**il comprend des bagues intérieures d'extrémité placées de part et d'autre desdits rouleaux intérieurs et présentant des trous longitudinaux dans lesquels sont respectivement engagées des extrémités de ces rouleaux et des moyens formant des butées axiales pour lesdites bagues.

13. Dispositif d'actionnement selon l'une quelconque des revendications précédentes, **caractérisé par le fait que** les éléments extérieurs de liaison comprennent des rouleaux longitudinaux filetés, l'angle d'hélice du filetage des rouleaux étant soit égal à l'angle d'hélice du filetage intérieur du fourreau extérieur et différent de l'angle d'hélice du filetage extérieur du fourreau intermédiaire soit égal à l'angle d'hélice du filetage extérieur du fourreau intermédiaire et différent de l'angle d'hélice du filetage intérieur du fourreau extérieur.

14. Dispositif d'actionnement selon la revendication 13, **caractérisé par le fait que** les rouleaux extérieurs comprennent au moins une partie annulaire à dents d'engrenage qui sont soit en prise avec des dents d'engrenage du fourreau extérieur soit en prise avec des dents d'engrenage du fourreau intermédiaire.

15. Dispositif d'actionnement selon l'une des revendications 13 et 14, **caractérisé par le fait qu'**il comprend des bagues extérieures d'extrémité placées de part et d'autre desdits rouleaux extérieurs et présentant des trous longitudinaux dans lesquels sont respectivement engagées des extrémités de ces rouleaux et des moyens formant des butées axiales pour lesdites bagues.

16. Dispositif d'actionnement selon l'une quelconque des revendications précédentes, **caractérisé par le fait que** les éléments roulants intérieurs comprennent des rouleaux longitudinaux filetés (7), l'angle d'hélice du filetage des rouleaux étant égal à l'angle d'hélice du filetage intérieur du fourreau intermédiaire et différent de l'angle d'hélice du filetage de la tige, et que les éléments roulants extérieurs comprennent des rouleaux longitudinaux filetés (25), l'angle d'hélice du filetage des rouleaux étant égal à l'angle d'hélice du filetage extérieur du fourreau intermédiaire et différent de l'angle d'hélice du filetage intérieur du fourreau extérieur.

17. Dispositif d'actionnement selon la revendication 16, **caractérisé par le fait que** les rouleaux intérieurs comprennent au moins une partie annulaire à dents d'engrenage qui sont en prise avec des dents d'engrenage du fourreau intermédiaire et que les rouleaux extérieurs comprennent au moins une partie annulaire à dents d'engrenage qui sont en prise avec des dents d'engrenage du fourreau intermédiaire.

18. Dispositif d'actionnement selon l'une des revendications 16 et 17, **caractérisé par le fait qu'**il comprend des bagues intérieures d'extrémité placées de part et d'autre desdits rouleaux intérieurs et présentant des trous longitudinaux dans lesquels sont respectivement engagées des extrémités de ces rouleaux et des moyens formant des butées axiales pour lesdites bagues, ainsi que des bagues extérieures d'extrémité placées de part et d'autre desdits rouleaux extérieurs et présentant des trous longitudinaux dans lesquels sont respectivement engagées des extrémités de ces rouleaux et des moyens formant des butées axiales pour lesdites bagues.

19. Dispositif d'actionnement selon l'une quelconque des revendications précédentes, **caractérisé par le fait que** lesdits moyens de couplage comprennent des moyens d'accouplement permettant de bloquer en rotation sélectivement soit la tige et fourreau intermédiaire, soit le fourreau intermédiaire et le fourreau extérieur, et des moyens de commande de ces moyens d'accouplement.

20. Dispositif d'actionnement selon la revendication 19, **caractérisé par le fait que** lesdits moyens d'accouplement comprennent une bague déformable radialement (57), reliée en rotation au fourreau intermédiaire et des moyens agissant sur cette bague pour l'amener sélectivement en appui contre la paroi intérieure du fourreau extérieur ou contre la paroi extérieur de la tige.

21. Dispositif d'actionnement selon l'une des revendications 19 et 20, **caractérisé par le fait que** lesdits moyens de commande comprennent des moyens de détection de couple et/ou des moyens de détection de rotation et/ou des moyens de détection d'effort axial et/ou des moyens de détection de déplacement axial relatif ainsi que des moyens pour activer lesdits moyens d'accouplement lorsque le signal délivré par ces moyens de détection passe un seuil déterminé.

22. Dispositif d'actionnement selon l'une quelconque des revendications précédentes, **caractérisé par le fait que** lesdits moyens de couplage (56) sont constitués par des différences relatives entre les angles d'hélice des filetages de la tige, du fourreau intermédiaire et du fourreau extérieur et/ou des différences relatives entre les profils des filetages de la tige, du fourreau intermédiaire et du fourreau extérieur et/ou des différences relatives entre l'avance par tour des filetages de la tige, du fourreau intermédiaire et du fourreau extérieur.

23. Dispositif d'actionnement selon l'une quelconque des revendications précédentes, **caractérisé par le fait qu'**il comprend des moyens de guidage du fourreau extérieur par rapport à ladite tige longitudinale et/ou des moyens de guidage du fourreau intermédiaire par rapport au fourreau extérieur et/ou des moyens de guidage (83) du fourreau intermédiaire par rapport à ladite tige longitudinale.

## Claims

1. Actuating device comprising:
a longitudinal shank (2, 70, 85, 91, 109, 125);
an intermediate sleeve (3, 75, 86, 92, 110, 126) positioned coaxially with respect to and around the said shank;
an external sleeve (4, 72, 93, 111, 127) positioned coaxially with respect to the said shank and around the said intermediate sleeve;
internal screw-threaded connecting means (5, 73, 94, 112, 128) allowing the longitudinal shank to be connected to the intermediate sleeve and designed to cause one to move axially relative to the other,
**characterized in that** this device comprises external screw-threaded connecting means (6, 78, 89, 96, 116, 131) allowing the intermediate sleeve to be connected to the external sleeve and designed to cause one to move axially relative to the other,
the said internal connecting means comprising internal rolling elements in mesh on the one hand with the external screw thread of the shank and with the internal screw thread of the intermediate sleeve and/or the said external connecting means comprising external rolling elements in mesh on the one hand with the external screw thread of the intermediate sleeve and with the internal screw thread of the external sleeve,
and comprising coupling means (5, 6; 56; 57; 131, 129, 130) allowing the shank and the intermediate sleeve or the intermediate sleeve and the external sleeve to be connected selectively rotatably.

2. Actuating device according to Claim 1, **characterized in that** the said coupling means are such that for a given axial force that is to be transmitted, a first of the said connecting means operates and the second does not operate or is immobilized and that when the input or driving torque applied to the shank or to the external sleeve exceeds at least one determined threshold value dependent on the force that is to be transmitted, the said second of the said connecting means operates and the said first of the said connecting means does not operate or is immobilized.

3. Actuating device according to one of Claims 1 and 2, **characterized in that** the said internal connecting means (128) comprise the said internal rolling elements and the said external connecting means (131) comprise an external screw thread of the intermediate sleeve and an internal screw thread of the external sleeve in mesh with one another.

4. Actuating device according to one of Claims 1 and 2, **characterized in that** the said external connecting means (131) comprise the said external rolling elements and the said internal connecting means (128) comprise an external screw thread of the longitudinal shank and an internal screw thread of the intermediate sleeve in mesh with one another.

5. Actuating device according to one of Claims 1 and 2, **characterized in that** the said internal connecting means (5; 73; 88; 94; 112) comprise the said internal rolling elements and the said external connecting means (6; 78; 89; 96; 116) comprise the said external rolling elements.

6. Actuating device according to any one of the preceding claims, **characterized in that** the internal rolling elements and/or the external rolling elements comprise balls positioned between internal and external screw threads and **in that** it comprises means for recirculating or repositioning these balls.

7. Actuating device according to Claim 6, **characterized in that** the intermediate sleeve comprises the said means for recirculating or repositioning the said balls.

8. Actuating device according to any one of the preceding claims, **characterized in that** the internal rolling elements and/or the external rolling elements comprise threaded longitudinal rollers in mesh with internal and external screw threads and **in that** it comprises means for recirculating or repositioning these rollers.

9. Actuating device according to Claim 8, **characterized in that** the intermediate sleeve comprises the said means for recirculating or repositioning the said rollers.

10. Actuating device according to any one of the preceding claims, **characterized in that** the internal rolling elements comprise threaded longitudinal rollers, the helix angle of the screw thread of the rollers being either equal to the helix angle of the screw thread of the shank and different from the helix angle of the internal screw thread of the intermediate sleeve or equal to the helix angle of the internal screw thread of the intermediate sleeve and different from the helix angle of the screw thread of the shank.

11. Actuating device according to Claim 10, **characterized in that** the internal rollers comprise at least one annular part with gear teeth which are either in mesh with gear teeth of the shank or in mesh with gear teeth of the intermediate sleeve.

12. Actuating device according to one of Claims 10 and 11, **characterized in that** it comprises internal end rings positioned on each side of the said internal rollers and having longitudinal holes in which the ends of these rollers are respectively engaged, and means forming axial end stops for the said rings.

13. Actuating device according to any one of the preceding claims, **characterized in that** the external connecting elements comprise threaded longitudinal rollers, the helix angle of the screw thread of the rollers being either equal to the helix angle of the internal screw thread of the external sleeve and different from the helix angle of the external screw thread of the intermediate sleeve or equal to the helix angle of the external screw thread of the intermediate sleeve and different from the helix angle of the internal screw thread of the external sleeve.

14. Actuating device according to Claim 13, **characterized in that** the external rollers comprise at least one annular part with gear teeth which are either in mesh with gear teeth of the external sleeve or in mesh with gear teeth of the intermediate sleeve.

15. Actuating device according to one of Claims 13 and 14, **characterized in that** it comprises external end rings positioned on each side of the said external rollers and having longitudinal holes in which the ends of these rollers are respectively engaged, and means forming axial end stops for the said rings.

16. Actuating device according to any one of the preceding claims, **characterized in that** the internal rolling elements comprise threaded longitudinal rollers (7), the helix angle of the screw thread of the rollers being equal to the helix angle of the internal screw thread of the intermediate sleeve and different from the helix angle of the screw thread of the shank, and **in that** the external rolling elements comprise threaded longitudinal rollers (25), the helix angle of the screw thread of the rollers being equal to the helix angle of the external screw thread of the intermediate sleeve and different from the helix angle of the internal screw thread of the external sleeve.

17. Actuating device according to Claim 16, **characterized in that** the internal rollers comprise at least one annular part with gear teeth which are in mesh with gear teeth of the intermediate sleeve and **in that** the external rollers comprise at least one annular part with gear teeth which are in mesh with gear teeth of the intermediate sleeve.

18. Actuating device according to one of Claims 16 and 17, **characterized in that** it comprises internal end rings positioned on each side of the said internal rollers and having longitudinal holes in which the ends of these rollers are respectively engaged, and means forming axial end stops for the said rings, and external end rings positioned on each side of the said external rollers and having longitudinal holes in which the ends of these rollers are respectively engaged, and means forming axial end stops for the said rings.

19. Actuating device according to any one of the preceding claims, **characterized in that** the said coupling means comprise coupling-together means, allowing either the shank and the intermediate sleeve or the intermediate sleeve and the external sleeve to be selectively immobilized in terms of rotation, and means for controlling these coupling-together means.

20. Actuating device according to Claim 19, **characterized in that** the said coupling-together means comprise a radially deformable ring (57) connected in terms of rotation to the intermediate sleeve and means acting on this ring in order selectively to make it bear against the internal wall of the external sleeve or against the external wall of the shank.

21. Actuating device according to one of Claims 19 and 20, **characterized in that** the said control means comprise means for detecting torque and/or means for detecting rotation and/or means for detecting axial force and/or means for detecting relative axial movement, together with means for activating the said coupling-together means when the signal delivered by these detection means crosses a determined threshold value.

22. Actuating device according to any one of the preceding claims, **characterized in that** the said coupling means (56) consist of relative differences between the helix angles of the screw threads of the shank, of the intermediate sleeve and of the external sleeve and/or of relative differences between the profiles of the screw threads of the shank, of the intermediate sleeve and of the external sleeve and/or of relative differences between the advance per revolution of the screw threads of the shank, of the intermediate sleeve and of the external sleeve.

23. Actuating device according to any one of the preceding claims, **characterized in that** it comprises means of guiding the external sleeve with respect to the said longitudinal shank and/or means of guiding the intermediate sleeve with respect to the external sleeve and/or means (83) of guiding the intermediate sleeve with respect to the said longitudinal shank.

## Patentansprüche

1. Betätigungsvorrichtung, die aufweist:
eine Längsstange (2, 70, 85, 91, 109, 125),
eine Zwischenhülse (3, 75, 86, 92, 110, 126), die koaxial zu der und um die Stange herum angeordnet ist,
eine Außenhülse (4, 72, 93, 111, 127), die koaxial zur Stange und um die Zwischenhülse herum angeordnet ist,
innere Verbindungsmittel mit Gewinde (5, 73, 94, 112, 128), die es ermöglichen, die Längsstange und die Zwischenhülse zu verbinden, und die geeignet sind, um eine axiale Bewegung der einen bezüglich der anderen zu erzeugen,
**dadurch gekennzeichnet, dass** sie aufweist
äußere Verbindungsmittel mit Gewinde (6, 78, 89, 96, 116, 131), die es ermöglichen, die Zwischenhülse und die Außenhülse zu verbinden, und die geeignet sind, um eine axiale Bewegung der einen bezüglich der anderen zu erzeugen,
wobei die inneren Verbindungsmittel innere rollende Elemente aufweisen, die einerseits mit dem Außengewinde der Stange und mit dem Innengewinde der Zwischenhülse in Eingriff sind, und/oder die äußeren Verbindungsmittel äußere rollende Elemente aufweisen, die einerseits mit dem Außengewinde der Zwischenhülse und dem Innengewinde der Außenhülse in Eingriff sind,
und Koppelmittel (5, 6; 56; 57; 131, 129, 130) aufweist, die es ermöglichen, selektiv die Stange und die Zwischenhülse oder die Zwischenhülse und die Außenhülse in Drehung zu verbinden.

2. Betätigungsvorrichtung nach Anspruch 1, **dadurch gekennzeichnet, dass** die Koppelmittel derart sind, dass für eine gegebene zu übertragende axiale Kraft ein erstes der Verbindungsmittel arbeitet und das zweite nicht arbeitet oder blockiert ist, und dass, wenn das Eingangs- oder Antriebsdrehmoment, das an die Stange oder die Außenhülse angewendet wird, mindestens einen von der zu übertragenden Kraft abhängenden Schwellwert überschreitet, das zweite der Verbindungsmittel arbeitet und das erste der Verbindungsmittel nicht arbeitet oder blockiert ist.

3. Betätigungsvorrichtung nach einem der Ansprüche 1 und 2, **dadurch gekennzeichnet, dass** die inneren Verbindungsmittel (128) die inneren rollenden Elemente aufweisen, und die äußeren Verbindungsmittel (131) ein Außengewinde der Zwischenhülse und ein Innengewinde der Außenhülse in Eingriff miteinander aufweisen.

4. Betätigungsvorrichtung nach einem der Ansprüche 1 und 2, **dadurch gekennzeichnet, dass** die äußeren Verbindungsmittel (131) die äußeren rollenden Elemente aufweisen, und die inneren Verbindungselemente (128) ein Außengewinde der Längsstange und ein Innengewinde der Zwischenhülse in Eingriff miteinander aufweisen.

5. Betätigungsvorrichtung nach einem der Ansprüche 1 und 2, **dadurch gekennzeichnet, dass** die inneren Verbindungsmittel (5; 73; 88; 94; 112) die inneren rollenden Elemente aufweisen, und die äußeren Verbindungsmittel (6; 78; 89; 96; 116) die äußeren rollenden Elemente aufweisen.

6. Betätigungsvorrichtung nach einem der vorhergehenden Ansprüche, **dadurch gekennzeichnet, dass** die inneren rollenden Elemente und/oder die äußeren rollenden Elemente Kugeln aufweisen, die zwischen Innen- und Außengewinden angeordnet sind, und dass sie Mittel aufweist, um diese Kugeln erneut umlaufen zu lassen oder sie neu zu positionieren.

7. Betätigungsvorrichtung nach Anspruch 6, **dadurch gekennzeichnet, dass** die Zwischenhülse die Mittel aufweist, um die Kugeln erneut umlaufen zu lassen oder sie neu zu positionieren.

8. Betätigungsvorrichtung nach einem der vorhergehenden Ansprüche, **dadurch gekennzeichnet, dass** die inneren rollenden Elemente und/oder die äußeren rollenden Elemente mit Gewinde versehene Längsrollen aufweisen, die mit dem Innengewinde und dem Außengewinde in Eingriff stehen, und dass sie Mittel aufweist, um die Rollen erneut umlaufen zu lassen oder sie neu zu positionieren.

9. Betätigungsvorrichtung nach Anspruch 8, **dadurch gekennzeichnet, dass** die Zwischenhülse die Mittel aufweist, um die Rollen erneut umlaufen zu lassen oder sie neu zu positionieren.

10. Betätigungsvorrichtung nach einem der vorhergehenden Ansprüche, **dadurch gekennzeichnet, dass** die inneren rollenden Elemente mit Gewinde versehene Längsrollen aufweisen, wobei der Steigungswinkel des Gewindes der Rollen entweder gleich dem Steigungswinkel des Gewindes der Stange und anders als der Steigungswinkel des Innengewindes der Zwischenhülse oder gleich dem Steigungswinkel des Innengewindes der Zwischenhülse und anders als der Steigungswinkel des Gewindes der Stange ist.

11. Betätigungsvorrichtung nach Anspruch 10, **dadurch gekennzeichnet, dass** die inneren Rollen mindestens einen ringförmigen Bereich mit Getriebezähnen aufweist, die entweder mit Getriebezähnen der Stange oder mit Getriebezähnen der Zwischenhülse in Eingriff stehen.

12. Betätigungsvorrichtung nach einem der Ansprüche 10 und 11, **dadurch gekennzeichnet, dass** sie innere Endringe, die zu beiden Seiten der inneren Rollen angeordnet sind und Längslöcher besitzen, in die jeweils Enden dieser Rollen eingeführt sind, und Mittel aufweist, die axiale Anschläge für die Ringe bilden.

13. Betätigungsvorrichtung nach einem der vorhergehenden Ansprüche, **dadurch gekennzeichnet, dass** die äußeren Verbindungselemente Längsrollen mit Gewinde aufweisen, wobei der Steigungswinkel des Gewindes der Rollen entweder gleich dem Steigungswinkel des Innengewindes der Außenhülse und anders als der Steigungswinkel des Außengewindes der Zwischenhülse oder gleich dem Steigungswinkel des Außengewindes der Zwischenhülse und anders als der Steigungswinkel des Innengewindes der Außenhülse ist.

14. Betätigungsvorrichtung nach Anspruch 13, **dadurch gekennzeichnet, dass** die äußeren Rollen mindestens einen ringförmigen Bereich mit Getriebezähnen aufweisen, die entweder mit Getriebezähnen der Außenhülse oder mit Getriebezähnen der Zwischenhülse in Eingriff stehen.

15. Betätigungsvorrichtung nach einem der Ansprüche 13 und 14, **dadurch gekennzeichnet, dass** sie äußere Endringe, die zu beiden Seiten der äußeren Rollen angeordnet sind und Längslöcher besitzen, in die jeweils Enden dieser Rollen eingeführt sind, und Mittel aufweist, die axiale Anschläge für die Ringe bilden.

16. Betätigungsvorrichtung nach einem der vorhergehenden Ansprüche, **dadurch gekennzeichnet, dass** die inneren rollenden Elemente mit Gewinde versehene Längsrollen (7) aufweisen, wobei der Steigungswinkel des Gewindes der Rollen gleich dem Steigungswinkel des Innengewindes der Zwischenhülse und anders als der Steigungswinkel des Gewindes der Stange ist, und dass die äußeren rollenden Elemente mit Gewinde versehene Längsrollen (25) aufweisen, wobei der Steigungswinkel des Gewindes der Rollen gleich dem Steigungswinkel des Außengewindes der Zwischenhülse und anders als der Steigungswinkel des Innengewindes der Außenhülse ist.

17. Betätigungsvorrichtung nach Anspruch 16, **dadurch gekennzeichnet, dass** die inneren Rollen mindestens einen ringförmigen Bereich mit Getriebezähnen aufweisen, die mit Getriebezähnen der Zwischenhülse in Eingriff stehen, und dass die äußeren Rollen mindestens einen ringförmigen Bereich mit Getriebezähnen aufweisen, die mit Getriebezähnen der Zwischenhülse in Eingriff stehen.

18. Betätigungsvorrichtung nach einem der Ansprüche 16 und 17, **dadurch gekennzeichnet, dass** sie innere Endringe, die zu beiden Seiten der inneren Rollen angeordnet sind und Längslöcher besitzen, in die jeweils Enden dieser Rollen eingeführt sind, und Mittel, die axiale Anschläge für die Ringe bilden, sowie äußere Endringe, die zu beiden Seiten der äußeren Rollen angeordnet sind und Längslöcher aufweisen, in die jeweils Enden dieser Rollen eingeführt sind, und Mittel aufweist, die axiale Anschläge für die Ringe bilden.

19. Betätigungsvorrichtung nach einem der vorhergehenden Ansprüche, **dadurch gekennzeichnet, dass** die Koppelmittel Kupplungsmittel, die es ermöglichen, selektiv entweder die Stange und die Zwischenhülse oder die Zwischenhülse und die Außenhülse in Drehung zu blockieren, und Steuermittel dieser Kupplungsmittel aufweisen.

20. Betätigungsvorrichtung nach Anspruch 19, **dadurch gekennzeichnet, dass** die Kupplungsmittel einen radial verformbaren Ring (57), der in Drehung mit der Zwischenhülse verbunden ist, und Mittel aufweisen, die auf diesen Ring einwirken, um ihn selektiv in Anlage gegen die Innenwand der Außenhülse oder gegen die Außenwand der Stange zu bringen.

21. Betätigungsvorrichtung nach einem der Ansprüche 19 und 20, **dadurch gekennzeichnet, dass** die Steuermittel Mittel zur Drehmomenterfassung und/oder Mittel zur Drehungserfassung und/oder Mittel zur Erfassung einer axialen Kraft und/oder Mittel zur Erfassung einer relativen axialen Verschiebung sowie Mittel zum Aktivieren der Kupplungsmittel aufweisen, wenn das von diesen Erfassungsmitteln gelieferte Signal einen bestimmten Schwellwert überschreitet.

22. Betätigungsvorrichtung nach einem der vorhergehenden Ansprüche, **dadurch gekennzeichnet, dass** die Koppelmittel (56) aus relativen Differenzen zwischen den Steigungswinkeln der Gewinde der Stange, der Zwischenhülse und der Außenhülse und/oder aus relativen Differenzen zwischen den Profilen der Gewinde der Stange, der Zwischenhülse und der Außenhülse und/oder aus relativen Differenzen zwischen dem Vorschub pro Umdrehung der Gewinde der Stange, der Zwischenhülse und der Außenhülse bestehen.

23. Betätigungsvorrichtung nach einem der vorhergehenden Ansprüche, **dadurch gekennzeichnet, dass** sie Führungsmittel der Außenhülse bezüglich der Längsstange und/oder Führungsmittel der Zwischenhülse bezüglich der Außenhülse und/oder Führungsmittel (83) der Zwischenhülse bezüglich der Längsstange aufweist.
